# EUROPÄISCHE PATENTSCHRIFT

(11) **EP 1 379 410 B1**
(45) Veröffentlichungstag und Bekanntmachung des Hinweises auf die Patenterteilung: **15.09.2004**
(21) Anmeldenummer: 02764050.7
(22) Anmeldetag: 14.03.2002
(51) Int. Cl.: B60R 25/02

(54) **LENKSCHLOSS FÜR FAHRZEUGE**
STEERING COLUMN LOCK FOR MOTOR VEHICLES
DISPOSITIF DE VERROUILLAGE DE COLONNE DE DIRECTION POUR VEHICULES AUTOMOBILES

(30) Priorität: 20.04.2001 DE 10119267
(43) Veröffentlichungstag der Anmeldung: 14.01.2004
(73) Patentinhaber: HUF HÜLSBECK & FÜRST GMBH & CO. KG, 42551 Velbert (DE)
(72) Erfinder: PIEPER, Friedrich, 84513 Töging (DE)
(74) Vertreter: Mentzel, Norbert, Dipl.-Phys.
(86) Internationale Anmeldenummer: PCT/EP2002/002843
(87) Internationale Veröffentlichungsnummer: WO 2002/085678

(56) Entgegenhaltungen:
- DE-A- 2 322 330
- GB-A- 2 346 354

## Beschreibung

Die Erfindung richtet sich auf ein Lenkschloss der im Oberbegriff des Anspruches 1 angegebenen Art. Bei einem ruhenden Fahrzeug ist ein Riegel für die Lenkspindel in seiner Verriegelungslage, wo die Lenkspindel nicht verdreht werden kann. Wenn Unbefugte den Rotor aus dem Lenkschloss herausbrechen wollen, wird eine Aufbruchsicherung wirksam. Die Aufbruchsicherung besteht aus einem federbelasteten Sperrstift und aus einem damit zusammenwirkenden Sicherungselement. Beim Herausbrechen des Lenkschlosses gibt das Sicherungselement den federbelasteten Sperrstift frei, der dann in seine Ausfahrstellung übergeht und den Riegel blockiert. Trotz Ausbruch des Rotors kann dann der Unberechtigte nicht den Riegel in die Freigabelage bringen. Das Fahrzeug ist dadurch diebstahlsicher. Das Dokument GB-A-2346354 offenbart ein Lenkschloss gemäß dem Oberbegriff des Anspruchs 1.

Bei der bekannten Vorrichtung dieser Art (EP 0806 328 A2) besteht das Sicherungselement aus einem mit einer Sollbruchstelle versehenen Blechstreifen der einerseits am Rotor angreift und andererseits eine Nase besitzt, welche eine Schulter am Sperrstift hintergreift. Wenn der Rotor herausgebrochen wird reißt der Blechstreifen und gibt den Sperrstift frei. Der Sperrstift fährt in eine Ausnehmung eines mit dem Riegel verbundenen Schiebers im Gehäuse, welcher über den Steuernocken den Riegel zwischen der Verriegelungs- und Freigabelage überführt.

Diese bekannte Aufbruchsicherung ist störanfällig und damit unzuverlässig. Ein wesentlicher Nachteil besteht aber darin, dass das bekannte Lenkschloss stets nur mit bereits integriertem Rotor ausgeliefert werden konnte. Im Falle von mechanischen Zugangsberechtigungsmitteln besteht der Rotor z.B. aus einem Schließzylinder der in Abstimmung mit dem ihm zugeordneten Schlüssel codiert ist. Bei der Auslieferung des bekannten Lenkschlosses müssen die individuellen Schlüssel dem jeweils richtigen Lenkschloss zugeordnet sein und in dieser Zuordnung bis zur Übergabe des Fahrzeugs verbleiben. Das ist sehr umständlich. Die gleichen Schwierigkeiten ergeben sich, wenn später ein defekter Schließzylinder ausgetauscht und danach die Aufbruchsicherung wieder scharf gemacht werden muss.

Der Erfindung liegt die Aufgabe zugrunde, ein zuverlässiges, die genannte Aufbruchsicherung aufweisendes Lenkschloss der im Oberbegriff des Anspruches 1 genannten Art zu entwickeln, welches zwar eine Montage und Demontage des Rotors durch Berechtigte zulässt, aber bei Herausbrechen des Rotors durch Unberechtigte die Lenkspindel zuverlässig blockiert. Diese scheinbar einander widerstreitenden Ziele löst die Erfindung durch die im Anspruch 1 angegebenen Maßnahmen, denen folgende besondere Bedeutung zukommt.

Das Problem, welches die Erfindung löst, besteht darin, dass eine Handlung nämlich der Ausbau bzw. Einbau des Rotors für den Berechtigten ohne weiteres möglich ist, beim Unberechtigten unmöglich werden soll. Nur im letztgenannten Fall soll die Aufbruchsicherung wirksam gesetzt und dadurch Manipulationen am Riegel verhindert werden. Die Erfindung macht sich bei der Lösung dieses Problems den Unterschied zwischen diesen beiden Personenkreisen zu nutze, der darin besteht, dass nur die berechtigte Person über die richtigen Zugangsberechtigungsmittel verfügt, die es ihr erlauben, den Rotor aus der Ruheposition bei abgestelltem Fahrzeug in eine zum Betrieb des Fahrzeugs erforderliche Arbeitsposition zu überführen. Deshalb schlägt die Erfindung vor, den zur Aufbruchsicherung gehörenden federbelasteten Sperrstift in die bei der Umsteuerung des Rotors mitdrehbaren Bauteile zu integrieren. Als Bauteil dafür schlägt die Erfindung den Steuernocken vor, obwohl man dafür aber auch andere, bei der Rotordrehung mitverdrehbare Bauteile verwenden könnte. Wenn eine unberechtigte Position sich am Lenkschloss eines ruhenden Fahrzeugs zu schaffen macht und den Rotor entfernt, dann sorgt ein federbelastetes Glied dafür, dass der im Steuernocken befindliche Sperrstift freigegeben wird und aufgrund seiner Federbelastung in eine Sperrausnehmung des Gehäuses einfährt. Dann sind eine Drehung des Steuernockens blockiert und weitere Manipulationen ausgeschlossen, um durch eine Nocken-Drehung den Riegel aus seiner Verriegelungslage in die Freigabelage zu überführen.

Die berechtigte Position, welche über die ordnungsgemäßen Zugangsberechtigungsmittel verfügt, kann aber den Rotor zunächst in seine Arbeitsposition überführen, z. B. in die Stellung "Fahrt" eines mit dem Lenkschloss kombinierten Zündschalters. Dadurch kommt nämlich der Sperrstift im Steuernocken in eine Drehstellung, wo er an einer Gehäuseinnenfläche abgestützt ist, und daher eine spätere Drehung des Steuernockens über den wieder eingebauten Rotor ohne weiteres zulässt. Die Erfindung nutzt diese Eigenschaft, um Lenkschlösser zunächst zu einer vorläufigen Baueinheit ohne Rotor vorzumontieren und so auszuliefern. Damit ist eine sehr einfache und übersichtliche Produktion ohne Rücksicht auf die individuellen Zugangsberechtigungsmittel möglich. Diese rotorlosen Lenkschloss-Vorprodukte können in großer Stückzahl hergestellt werden und werden erst später, z. B. bei der Fahrzeug-Endmontage, mit dem individuellen Paaren aus Rotor einerseits und Zugangsberechtigungsmitteln, wie Schlüsseln, andererseits versehen.

Dieses Lenkschloss-Vorprodukt liegt bei der Erfindung in einer besonderen "Auslieferungsstellung" vor, welche der normalerweise nur über die Zugangsberechtigungsmittel einstellbaren Arbeitsposition des Steuernockens entspricht. Dann befindet sich nämlich, wie bereits erwähnt wurde, der federbelastete Sperrstift in Abstützung an einer Gehäuseinnenfläche und lässt, nach Einbau des Rotors, eine Drehung des Steuernockens in die Ruheposition wieder zu. Dadurch sind die Herstellung, der Transport, der Einbau, und die Reparatur der erfindungsgemäßen Lenkschlösser wesentlich vereinfacht. Das individuelle Paar von Rotor und Zugangsberechtigungsmittel wird erst im letzten Moment in das erwähnte besondere Lenkschloss-Vorprodukt eingebaut. Auch ein späterer Austausch eines defekten Rotors ist möglich, ohne die Mittel für die spätere Aufbruchssicherheit durch unberechtigte Personen vorher ausbauen zu müssen. Diese bleiben immer intakt. Die berechtigte Person mit ihren Zugangsberechtigungsmittel braucht sich um die Aufbruchssicherung des Schlosses überhaupt nicht zu kümmern; sie merkt nicht einmal das eine solche vorgesehen ist. Die Aufbruchssicherung wird nur gegenüber dem Dieb zuverlässig wirksam.

Weitere Maßnahmen und Vorteile der Erfindung ergeben sich aus den Unteransprüchen, der nachfolgenden Beschreibung und aus den Zeichnungen. In den Zeichnungen ist die Erfindung in einem Ausführungsbeispiel dargestellt. Es zeigen:
- Fig. 1: einen Längsschnitt durch das erfindungsgemäße Lenkschloss, wenn der eingebaute Rotor sich in seiner Ruheposition befindet und der zugehörige Schlüssel abgezogen ist,
- Fig. 2: einen Querschnitt durch das Lenkschloss von Fig. 1 längs der dortigen Schnittlinie II-II,
- Fig. 3: in einer in der Fig. 1 entsprechenden Schnittdarstellung, das Lenkschloss, wenn der Rotor durch Unberechtigte herausgerissen worden ist,
- Fig. 4: in einer der Fig. 2 entsprechenden Darstellung, einen Querschnitt durch das in Fig. 3 gezeigte Lenkschloss längs der dortigen Schnittlinie IV-IV,
- Fig. 5: in einem der Fig. 1 entsprechenden Längsschnitt, das intakte Lenkschloss nach der Erfindung, wenn der eingesteckte Schlüssel den Rotor in eine Arbeitsposition überführt hat, die z.B. der Stellung "Fahrt" des Fahrzeugs entspricht,
- Fig. 6: in Analogie zu Fig. 2, wieder einen Querschnitt durch das in Fig. 5 gezeigte Lenkschloss längs der dortigen Schnittlinie VI-VI,
- Fig. 7: in einer der Fig. 1 entsprechenden Darstellung, das Lenkschloss in einer "Auslieferungsstellung", die es berechtigten Personen erlaubt einen ausgewählten Rotor ein- oder auszubauen,
- Fig. 8: einen Querschnitt durch eine mit dem erfindungsgemäßen Lenkschloss ausgerüstete Lenkspindel, wenn diese über den in seiner Verriegelungsposition befindlichen Riegel blockiert ist und
- Fig. 9: einen Querschnitt durch das in Fig. 8 gezeigte Lenkschloss längs der dortigen Schnittlinie VIII-VIII.

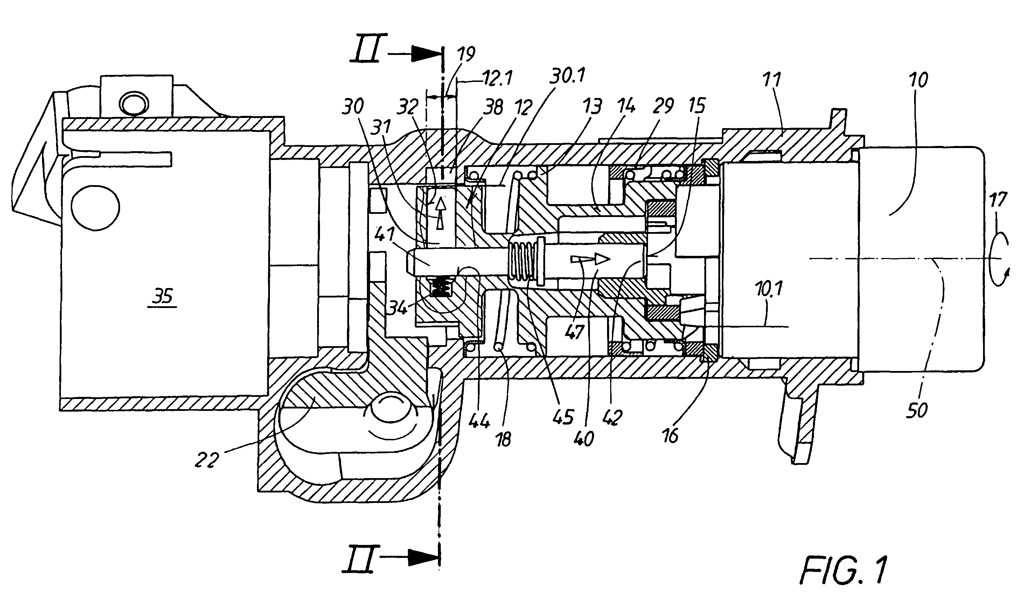

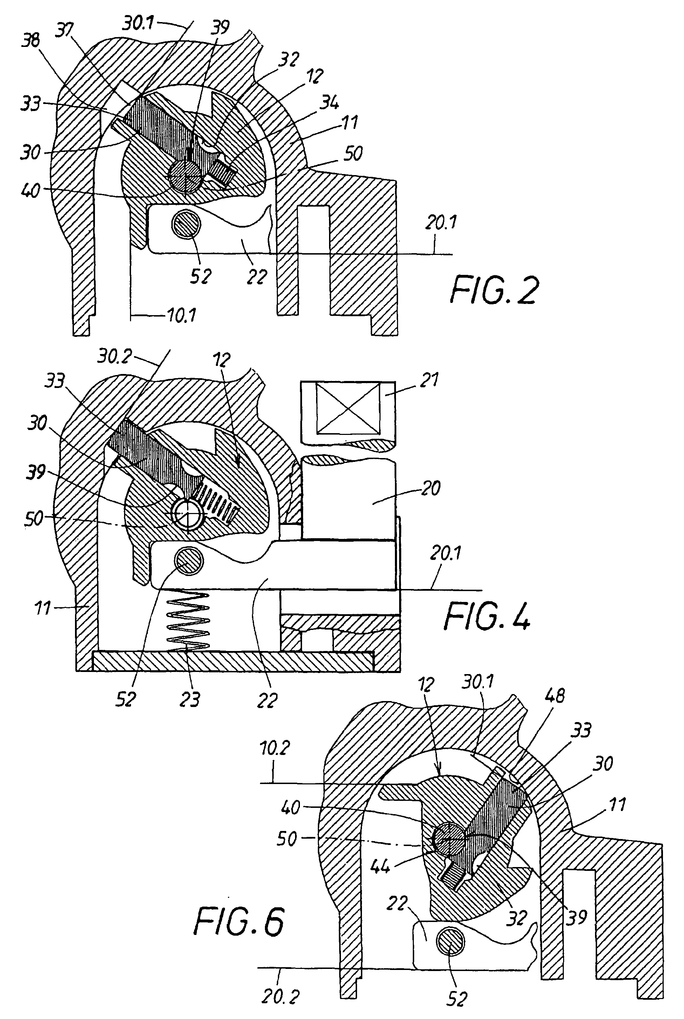

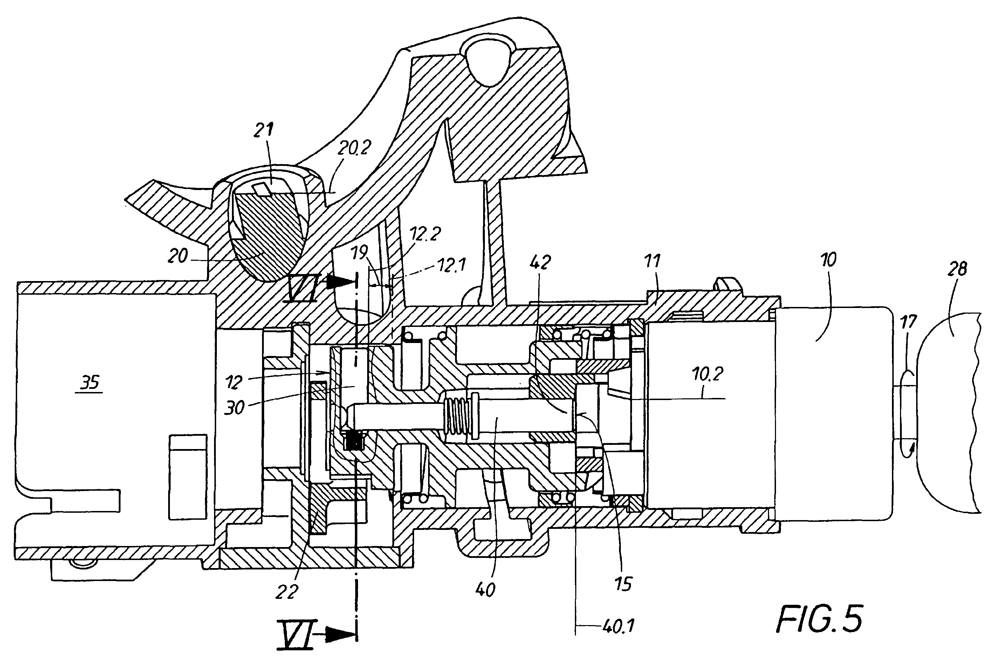

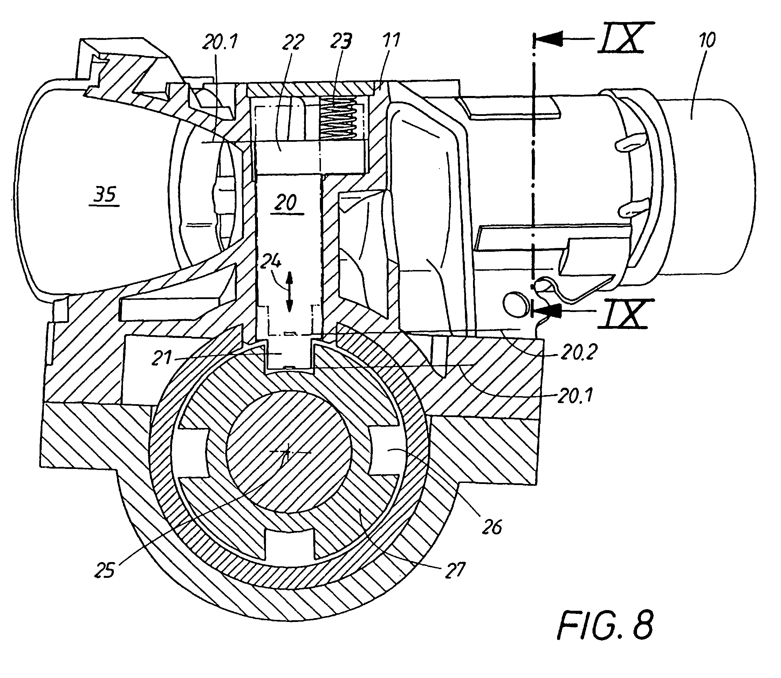

Wie am besten aus der Schnittansicht von Fig. 8 zu erkennen ist, umfasst das Lenkschloss einen Rotor 10 in einem Gehäuse 11, der durch Wirksamsetzen von Zugangsberechtigungsmitteln zwischen verschiedenen Positionen verdrehbar ist, von denen die eine 10.1, nämlich eine "Ruheposition" in Fig. 1 und die andere 10.2, nämlich eine "Arbeitsposition" aus Fig. 5 zu entnehmen sind. In axialer Ausrichtung und in drehfester Verbindung mit dem Rotor 10 ist ein Steuernocken 12 angeordnet, der nicht nur ein aus Fig. 2 erkennbares Radialprofil besitzt, sondern auch axial in einen Nockenbund 13 und eine Nockenhülse 14 gegliedert ist. Alle diese Bestandteile sollen nachfolgend zusammenfassend mit "Steuernocken" bezeichnet werden. Am Stirnende der profilierten Nockenhülse 14 sitzt eine Steuerscheibe 16 im Gehäuse, die den Steuernocken 12 axial bewegt, wenn eine durch den Drehpfeil 17 verdeutlichte Rotordrehung 10 erfolgt. Diese Axialbewegung erfolgt in Abstimmung mit der Ruheposition 10.1 und Arbeitsposition 10.2 des Rotors. In der Ruheposition 10.1 befindet sich der Steuernocken 12 in der durch die Hilfslinie 12.1 in Fig. 1 verdeutlichten Ausgangslängslage. Nach der Rotordrehung 17 bewegt sich der Steuernocken 12 aufgrund des Profils an der Steuerscheibe 16 gegen die Wirkung einer ihn in der Ausgangslängslage 12.1 positionierenden Rückstellfeder 18 in die aus Fig. 5 ersichtliche Endlängslage 12.2, die in Fig. 5 zu erkennen und durch die entsprechende Hilfslinie 12.2 gekennzeichnet ist. Die Hubstrecke 19 zwischen den beiden Längslagen 12.1 und 12.2 ist in Fig. 1 und 5 eingezeichnet.

Eine wichtige Funktion des Lenkschlosses besteht darin, bei abgestelltem, ruhendem Fahrzeug, eine aus Fig. 8 ersichtliche Lenkspindel 25 zu blockieren. Dazu dient ein Riegel 20, dessen Riegelende 21 in diesem Fall in eine der Riegelöffnungen 26 einfährt, die in einem mit der Lenkspindel 25 drehfesten Kranz 27 sitzen. Der Riegel 20 ist im Gehäuse 11 im Sinne des Doppelpfeils 24 von Fig. 8 längsverschieblich und befindet sich unter der Wirkung einer Druckfeder 28 in seiner durch die Hilfslinie 20.1 dort gekennzeichneten Verriegelungslage.

Der Riegel 20 sitzt an einem mit ihm längsbeweglichen Schieber 22, von dem ein Stück auch in Fig. 1 und 2 zu erkennen ist. In Fig. 2 ist auch die Hilfslinie 20.1 für die Verriegelungslage am Schieber 22 eingezeichnet. In Fig. 2 ist die zur Verriegelungslage 20.1 des Schiebers 22 gehörende Drehstellung des Steuernockens 12 durch eine Hilfslinie 10.2 verdeutlicht, welche durch die Arbeitsposition des Rotors 10 bestimmt ist. Wie Fig. 1 zeigt, ist zwischen der Hülse 14 des Steuernockens 12 und der Steuerscheibe 16 eine Überlastkupplung 29 angeordnet. Wenn anstelle der ordnungsgemäßen Zugangsberechtigungsmittel eine gewaltsame Drehung des Rotors 10 durch Einbruchswerkzeuge erfolgt, dann löst die Überlastkupplung 29 die Kupplung zwischen dem Steuernocken 12 und dem Mitnahmeende des Rotors 10.

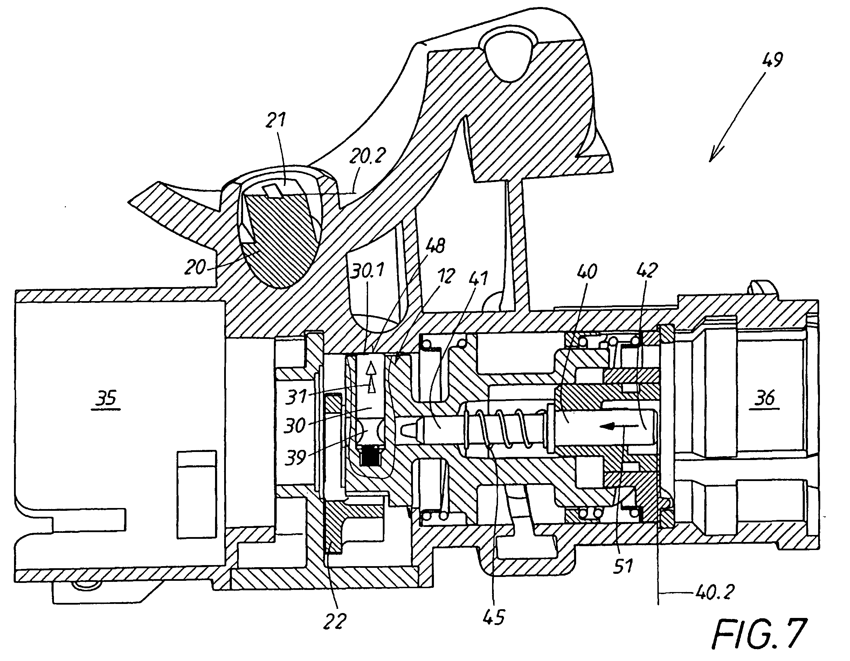

Im vorliegenden Fall ist der Rotor 10 als Schließzylinder ausgebildet, der auf mechanische Weise, durch Zuhaltungen, codiert ist und dem ein bestimmter Schlüssel 28 zugeordnet ist. Dieser Schlüssel 28 besitzt den entsprechenden Code, der im vorliegenden mechanischen Fall aus in Abstimmung mit den Zuhaltungen im Schließzylinder 10 angeordneten Einschnitten im Schlüsselschaft besteht. Es versteht sich, dass jedes andere bekannte elektrisch oder elektronische Zugangsberechtigungssystem anstelle eines Schließzylinders und Schlüssels 28 verwendet werden könnte. Der Schlüssel 28 lässt sich nur in der Ruheposition 10.1 einstecken. Durch eine Schlüsseldrehung 18 in die Arbeitsposition 10.2 wird der Steuernocken 12 in die entsprechende, durch die Hilfslinie 10.2 in Fig. 6 veranschaulichte Drehposition überführt, durch welche der Schieber 22 gegen die Wirkung seiner Druckfeder 23 in eine durch die Hilfslinie 20.2 in Fig. 6 verdeutlichte Lage übergeht. In dieser Lage 20.2 wird das Riegelende 21 von Fig. 8 aus der Riegelöffnung 26 der Lenkspindel 25 herausgezogen; die Lenkspindel 25 ist frei. Die Lage 20.2 erweist sich somit als Freigabelage des Riegels 20 und ist auch in Fig. 8 strichpunktiert verdeutlicht.

Im hinteren, mit 35 gekennzeichneten Raumbereich des Gehäuses 11 können elektrische oder elektronische Schalter vorgesehen sein, die bei der Rotordrehung 17 mitgedreht werden und den zugehörigen Motor und die sonstige Elektrik bzw. Elektronik im Fahrzeug in verschiedene Schaltpositionen überführen. Eine dieser Fahrtpositionen ist die Stellung "Fahrt" des Fahrzeugs, welche im vorliegenden Fall die Arbeitsposition 10.2 von Fig. 5 und 6 kennzeichnet.

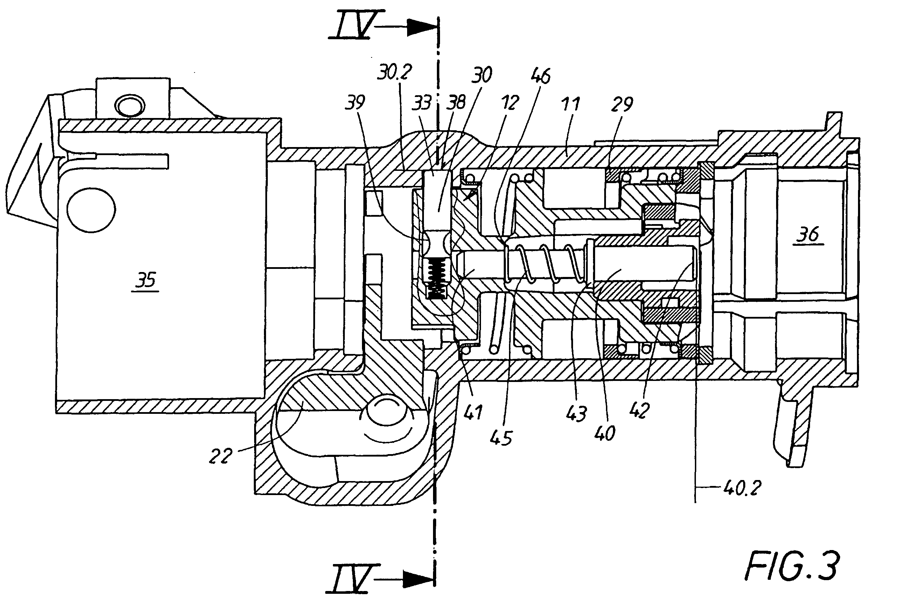

Unberechtigte Personen, die nicht über die ordnungsgemäßen Zugangsberechtigungsmittel, d.h. im vorliegenden Fall nicht über den erwähnten ordnungsgemäßen Schlüssel 28 verfügen, könnten versuchen, das stillgesetzte Fahrzeug lenkbar zu machen, indem der Rotor 10 herausgerissen wird, um sich in den dortigen Raum 36 des Gehäuses 11 Zugang zu verschaffen, wie in Fig. 3 zu erkennen ist. Diese unberechtigte Person könnte dann versuchen, die Überlastkupplung 29 dadurch zu "überlisten", indem sie unmittelbar eine Drehung auf den Steuernocken 12 ausübt, mit dem Ziel, den Riegel 20 aus seiner Verriegelungslage 10.1 von Fig. 2 und 8 in seine Freigabelage 20.2 zu überführen. Dies ist aber bei der Erfindung aus folgendem Grund nicht möglich.

Wie Fig. 1 und 2 verdeutlichen, befindet sich im Steuernocken 12 ein Sackloch 32, in welchem ein Sperrstift 30 längsverschieblich aufgenommen ist. Am Grund des Sacklochs 32 ist eine Druckfeder 34 angeordnet, die eine im Ausfahrsinne wirkende Federbelastung 31 auf den Sperrstift 30 ausübt. Im Normallfall wird der Sperrstift 30 in der aus Fig. 1 und 2 ersichtlichen Rückzugsstellung 30.1 gehalten, wo er nicht aus der Öffnung 37 des Sacklochs 32 herausragt. In der Ruheposition des Rotors, die sich in der bereits genannten, ebenfalls durch die Hilfslinie 10.1 gekennzeichneten Drehstellung von Fig. 2 befindet, ist das Sperrende 33 vom Sperrstift 30 mit einer im Gehäuse 11 vorgesehenen Sperrausnehmung 38 ausgerichtet.

Die Rückzugsstellung 30.1 vom Sperrstift 30 entsteht durch ein federbelastetes Fühlglied, welches im vorliegenden Fall aus einem Fühlstift 40 besteht. Ausweislich der Fig. 1 ist der Fühlstift 40 in einer Bohrung 44 aufgenommen, die parallel zu der in Fig. 1 strichpunktiert angedeuteten Nocken-Rotor-Achse 50 bzw., wie im vorliegenden Fall, konzentrisch zu dieser Achse 50 verläuft. Das eine Ende 41 des Fühlstifts hält den Sperrstift 30 in dessen Rückzugsstellung 30.1. Dazu besitzt der Sperrstift 30 eine am besten aus Fig. 4 ersichtliche Aussparung 39, in welche dieses "Halteende" 41 vom Fühlstift 40 eingreift und damit die Federbelastung 31 des Sperrstifts 30 unwirksam setzt.

Dies ändert sich jedoch, wenn der Rotor, gemäß Fig. 3 von unberechtigten Personen herausgebrochen worden ist. Dann fährt der Fühlstift 40 mit seinem anderen Ende 42 in den leeren Raum 36 des Gehäuses 11. Der Fühlstift 40 steht nämlich unter der Wirkung einer Druckfeder 45, die sich mit ihrem einen Ende an einen Bund 43 abstützt, während das andere Ende an einer Schulter 46 im Inneren des Steuernockens 12 anliegt. Vorausgehend, bei eingebautem Rotor 10, stützt sich dieses zweite Ende 42 vom Fühlstift 40 an einer Fläche 15 des Rotors 10 ab. Dann ist die Druckfeder 45 zwar vorgespannt, aber der Eingriff zwischen dem Halteende 41 und dem Sperrstift 30 gesichert. Dieses Ende 42 des Fühlstifts 40 erweist sich somit als "Fühlende", welches die Anwesenheit des Rotors 10 im Gehäuse 11 feststellt.

Wenn der Rotor gemäß Fig. 3 herausgebrochen ist, so wird das Halteende 41 des Fühlstifts 40 aus der Aussparung 39 des Sperrstifts 30 herausgezogen. Die in Fig. 1 durch den Kraftpfeil 47 verdeutlichte Federkraft des Fühlstifts 40 kann sich wegen des nun freiliegenden Fühlendes 42 entfalten. Der freigegebene Sperrstift 30 fährt aufgrund seiner aus Fig. 1 erkennbaren Federbelastung 31 mit seinem Sperrende 33 in die gehäuseseitige Sperrausnehmung 38, wie aus Fig. 3 zu entnehmen ist. Dann befindet sich der Sperrstift 30 in seiner in Fig. 3 und 4 mit 30.2 gekennzeichneten Ausfahrstellung. Jetzt ist eine Drehung des Steuernockens 12 blockiert. Gewaltsame Drehungen sind erfolglos. Der Riegel 20 verbleibt, wie Fig. 4 verdeutlicht, in seiner Verriegelungslage 20.1, wie sie bereits vorausgehend gemäß Fig. 2 vorlag. Die Bauteile 30, 40 erweisen sich als sehr wirksame "Aufbruchsicherung" des erfindungsgemäßen Lenkschlosses.

Ohne die Funktionsfähigkeit der vorerwähnten Mittel zur Aufbruchsicherung zu gefährden, ist es für berechtigte Personen ohne weiteres möglich, den Rotor 10 einoder auszubauen. Dazu nutzt die Erfindung die bereits beschriebene Arbeitsposition 10.2 des Steuernockens 12 gemäß Fig. 5 und 6. Wie bereits beschrieben wurde, liegen dann einerseits die mit 10.2 gekennzeichnete Drehstellung und andererseits die mit 12.2 gekennzeichnete Endlängslage von Fig. 2 des Steuernockens 12 vor. Gemäß Fig. 6 ist dann das Sperrende 33 vom Sperrstift 30 sowohl im Dreh- als auch im Längsversatz zur Sperrausnehmung 38 und liegt einer Gehäuseinnenfläche 48 gegenüber.

Diese nur über die Zugangsberechtigungsmittel erzielbare Position wird bei der Erfindung als "Auslieferungsstellung" der aus Fig. 7 ersichtlichen Baueinheit des Lenkschlosses genutzt, die zunächst ohne den Rotor 10 komplett vorgefertigt wird. Fig. 7 zeigt also ein Lenkschloss-Vorprodukt 49, wie es zunächst herstellerseitig, ohne Codierung, in großer Stückzahl hergestellt werden kann. Weil in diesem Vorprodukt 49 der Gehäuseraum 36 noch ohne eingebautem Rotor 10 ist, gelangt das Fühlende 42 vom Fühlstift 40 in die gleiche mit 40.2 gekennzeichnete "Loslassstellung", wie sie im Aufbruchfall von Fig. 3 beschrieben wurde. Auch bei dem Vorprodukt 49 hat folglich das Halteende 41 vom Fühlstift 40 den Sperrstift 30 losgelassen, weshalb an ihm die beschriebene Federbelastung 31 in Fig. 7 an sich wirksam werden könnte. Dies kann aber nicht geschehen, weil, wie bereits erwähnt wurde, ein radialer und gegebenenfalls axialer Versatz des Sperrendes 33 gemäß Fig. 6 vorliegt. Die Verhältnisse von Fig. 7 unterscheiden sich nur dadurch von Fig. 6, dass der dort im Schnitt gezeichnete Fühlstift 40 aus der Eingriffsposition mit dem Sperrstift 30 wegbewegt worden ist und daher die zur Fig. 6 gehörende Haltestellung 40.1 des Fühlstifts 40 nicht mehr vorliegt. Es liegt zwar die Entkupplung des Sperrstifts 30 von Fig. 4 auch in Fig. 7 vor, doch stützt sich dann, wie Fig. 6 erkennen lässt, das Stift-Sperrende 33 an der Gehäuseinnenfläche 48 ab. Deswegen bleibt der Sperrstift 30 beim Vorprodukt 49 von Fig. 7 in der aus Fig. 6 und 7 erkennbaren ursprünglichen Rückzugsstellung 30.1. Eine Drehung des Nockens 12 wäre beim Vorprodukt 49 von Fig. 7 an sich möglich.

Das Vorprodukt 49 wird in dieser Weise zunächst im Fahrzeug eingebaut und dabei die beschriebene Auslieferungsstellung eingehalten. Dann erst, in der Endmontage des kompletten Fahrzeugs kann der Rotor in den Gehäuseraum 26 des Vorprodukts 49 von Fig. 7 eingebaut werden. Beim Einbau stößt der Rotor mit seinem Stirnende 15 gegen das Fühlende 42 des Fühlstifts 40 und drückt ihn im Sinne des Pfeils 51 von Fig. 7 gegen die Wirkung der Druckfeder 45 in die Haltestellung 40.1 von Fig. 5 zurück. Dies ist möglich, weil das Halteende 41 vom Fühlstift 40 gemäß Fig. 7 mit seiner Aussparung 39 im Sperrstift 30 axial ausgerichtet ist; bei der Rückstellbewegung 51 des Fühlstifts 40 fährt daher das Halteende 41 problemlos in die Aussparung 39 ein. Es liegen dann wieder die Verhältnisse gemäß Fig. 5 vor. Das Vorprodukt 49 ist zu einem Endprodukt geworden, dem ein in bestimmter Weise codierter Rotor 10 zugeordnet ist.

In Fig. 5 befinden sich die drehbaren Bauteile des Endprodukts in der beschriebenen Arbeitsposition 10.2. Durch Einstecken eines Schlüssels 28 mit dem zum eingebauten Rotor richtigen Code, lässt sich mittels einer Schlüsseldrehung 17 wieder die Ruheposition 10.1 der Drehteile gemäß Fig. 1 und 2 erreichen. Der Riegel 20 blockiert dann das ruhende Fahrzeug wunschgemäß gegenüber Drehbewegungen seiner Lenkspindel 25. Die Demontage eines nach längerem Gebrauch defekten Rotors 10 lässt sich in analoger Weise durch Einstecken und Drehen 17 eines zugeordneten Schlüssels 28 in die Arbeitsposition 10.2 von Fig. 5 und 6 erreichen. Dann ist wieder der Ausbau des Rotors möglich. Man erhält dann die in Fig. 7 beschriebenen Verhältnisse, die für den problemlosen Einbau eines neuen Rotors geeignet sind.

Im vorliegenden Fall haben sowohl der Sperrstift 30 als auch der Fühlstift 40 Rund-Querschnitte. Deswegen kann die Aussparung 39 aus einer umfangsseitigen Ringnut gemäß Fig. 7 bestehen. Diese hat ein zum Rund-Querschnitt des Fühlstifts 40 komplementäres Nutprofil. In der Rückzugsstellung 30.1 des Sperrstifts 30 ergänzt, wie Fig. 6 zeigt, die ringnutartige Aussparung 39 die Bohrung 44 im Kreuzungspunkt mit dem zum Sperrstift 30 gehörenden Sackloch 32.

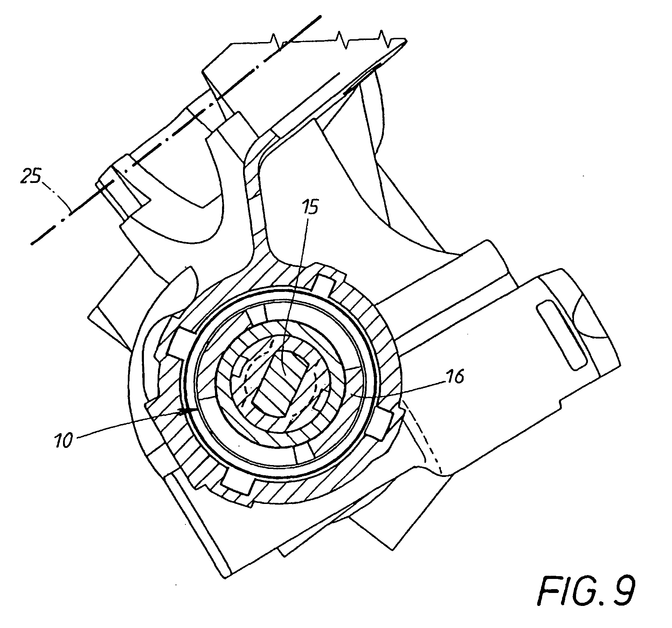

Die Fig. 9 zeigt einen Schnitt durch den hier als Schließzylinder ausgebildeten Rotor 10. Man erkennt das unrunde Endstück des zum Schließzylinder im Rotor 10 gehörenden Zylinderkerns, dessen Stirnende als Stützfläche 15 für den Fühlstift 40 dienen kann.

In den Schnittansichten 2, 4 und 6 ist noch ein Sicherungsstift 52 mit rundem Profil im Schnitt dargestellt, der zu einer nicht näher erkennbaren Schlüssel-Abzugssicherung gehört. Wenn über den eingesteckten Schlüssel 28 der Rotor 10 aus seiner Arbeitsposition 10.2 von Fig. 5 in seine Ruheposition 10.1 zurückgeführt worden ist, dann hintergreift der Sicherungsstift 52, solange der Schlüssel 28 noch im Rotor 10 steckt, nicht näher gezeigte Schultern im Inneren des Gehäuses 11. Dadurch bleibt über den wirksam gesetzten Sicherungsstift 52 der Schieber 22 zusammen mit dem darin sitzenden Riegel 20 in der aus Fig. 6 erkennbaren Freigabelage 20.2, obwohl der Steuernocken 12 wieder in seine ursprüngliche Ruheposition 10.1 von Fig. 2 übergegangen ist. Erst wenn der Schlüssel 28 aus dem Rotor 10 herausgezogen worden ist, geben die Steuerglieder den Sicherungsstift 52 frei. Dieser bewegt sich dann aufgrund seiner Federbelastung wieder in eine die Schultern im Gehäuse freigebenden Position, wodurch der Schieber 22 mit dem Riegel 20 aus seiner Freigabelage 20.2 von Fig. 6 in die zu Fig. 1 gehörende Verriegelungslage 20.1 von Fig. 2 sich aufgrund seiner Druckfeder 23 bewegen kann.

### Bezugszeichenliste:

- 10: Rotor
- 10.1: Ruheposition von 10 (Fig. 1, 2)
- 10.2: Arbeitsposition von 10 (Fig. 5, 6)
- 11: Gehäuse
- 12: Steuernocken
- 12.1: Ausgangslängslage von 12 (Fig. 1)
- 12.2: Endlängslage von 12 (Fig. 5)
- 13: Nockenbund (Fig. 1)
- 14: Nockenhülse (Fig. 1)
- 15: Stützfläche an 10 für 42, Stirnende (Fig. 1)
- 16: Steuerscheibe für 12 (Fig. 1, 9)
- 17: Drehpfeil für 10, Schlüsseldrehung, Rotordrehung (Fig. 1, 5)
- 18: Rückstellfeder für 12 in 12.1 (Fig. 1)
- 19: Hubstrecke von 12 zwischen 12.1 und 12.2 (Fig. 1, 5)
- 20: Riegel
- 20.1: Verriegelungslage von 20 (Fig. 2, 4, 8)
- 20.2: Freigabelage von 20 (Fig. 6)
- 21: Riegelende von 20 (Fig. 4, 8)
- 22: Schieber an 20
- 23: Druckfeder für 20 (Fig. 8)
- 24: Doppelpfeil der Längsbewegung von 20 (Fig. 8)
- 25: Lenkspindel, Spindelachse
- 26: Riegelöffnung in 27 (Fig. 8)
- 27: Kranz für 26 an 25 (Fig. 8)
- 28: Zugangsberechtigungsmittel, Schlüssel für 10 (Fig. 5)
- 29: Überlastkupplung zwischen 10, 12 (Fig. 1 )
- 30: Sperrstift
- 30.1: Rückzugsstellung von 30 (Fig. 1, 2, 6)
- 30.2: Ausfahrstellung von 30 (Fig. 3, 4)
- 31: Pfeil der Federbelastung von 30
- 32: Sackloch für 30
- 33: Sperrende von 30
- 34: Druckfeder für 30
- 35: Raumbereich für Zündschalter in 11
- 36: Gehäuseraum für 10 in 11 (Fig. 3, 7)
- 37: Öffnung von 32 (Fig. 2)
- 38: Sperrausnehmung in 11 für 33 (Fig. 1, 2)
- 39: Aussparung in 30 für 41, Ringnut (Fig. 4, 6, 7)
- 40: Fühlstift
- 40.1: Haltestellung von 40 (Fig. 5)
- 40.2: Loslassstellung von 40 (Fig. 3, 7)
- 41: Halteende von 40 für 30 (Fig. 1)
- 42: Fühlende von 40 für 10 (Fig. 3)
- 43: Bund an 40 für 45 (Fig. 3)
- 44: Bohrung für 40 (Fig. 1)
- 45: Druckfeder für 40 (Fig. 3)
- 46: Schulter in 12 für 45 (Fig. 3)
- 47: Pfeil der Federkraft von 45 (Fig. 1)
- 48: Innenfläche von 11 für 33 (Fig. 6, 7)
- 49: Lenkschloss-Vorprodukt (Fig. 7)
- 50: Nocken-Rotor-Achse (Fig. 1)
- 51: Pfeil der Rückstellbewegung von 40 aus 40.2 in 40.1 (Fig. 7)
- 52: Sicherungsstift an 22 für 20 (Fig. 2, 4, 6)

## Patentansprüche

1. Lenkschloss für Fahrzeuge,
mit in einem ortsfesten Gehäuse (11) gelagerten Rotor (10), der nach Wirksamsetzen von Zugangsberechtigungsmitteln (28) aus seiner Ruheposition (10.1) in wenigstens eine Arbeitsposition (10.2) verdrehbar ist,
mit einem im Gehäuse (11) aufgenommenen Steuernocken (12), der bei der Rotor-Drehung (17) mitgedreht wird,
mit einem Riegel (20) der vom Steuernocken (12) gegenüber einer Lenkspindel (25) zwischen einer Verriegelungslage (20.1) und einer Freigabelage (20.2) umsteuerbar ist,
und mit einer Aufbruchsicherung (30, 40) des Schlosses, die einen federbelasteten Sperrstift (30) aufweist,
wobei - im Normalfall - der Sperrstift (30) sich in einer Rückzugsstellung (30.1) befindet, in welcher ein Sicherungselement eine Schulter des Sperrstifts (30) hintergreift und eine Umsteuerung des Riegels (20) zulässt,
aber - bei herausgebrochenem Rotor (10) - das Sicherungslement den Sperrstift (30) freigibt, worauf dieser - aufgrund seiner Federbelastung (31) - in eine Ausfahrstellung (30.2) übergeht und eine Umsteuerung des Riegels (20) aus dessen Verriegelungslage (20.1) in die Freigabelage (20.2) blockiert,
wobei der Sperrstift (30) in den Steuernockens (12) integriert und bei einer Rotordrehung (17) stets mitdrehbar ist,
wobei der Sperrstift (30) zwar in der Ruheposition (10.1), nicht aber in der Arbeitsposition (10.2) des Rotors (10) mit einer Sperrausnehmung (38) im Gehäuse (11) ausgerichtet ist, und wobei der freigegebene Sperrstift (30) zwar in der Ruheposition (10.1) des Rotors (10) in die Sperrausnehmung (38) des Gehäuses (11) einfährt und eine Drehung blockiert, aber in der Arbeitsposition (10.2) des Rotors (10) sich an einer Gehäuseinnenfläche (48) abstützt und eine Drehung des Steuernockens (12) gestattet,
**dadurch gekennzeichnet,**
**dass** das Sicherungselement aus einem seinerseits federbelasteten (47) Fühlglied (40) besteht, welches - bei eingebautem Rotor (10) - sich wenigstens mittelbar am Rotor (10) abstützt (15) und den Sperrstift (30) in dessen Rückzugsstellung (30.1) hält,
**dass** bei fehlendem Rotor (10) das Fühlglied aufgrund seiner Federbelastung (31) sich in den vom Rotor 10) freigebenden Gehäuseraum (36) hineinbewegt und den Sperrstift (30) freigibt.

2. Lenkschloss nach Anspruch 1, **dadurch gekennzeichnet, dass** der Sperrstift (30) in einem radialen Sackloch (32) steckt,
dass am Grund des Sacklochs (32) eine Druckfeder (34) angeordnet ist, die sich am Sperrstift (30) abstützt,
und dass der Sperrstift (30) in seiner Ausfahrstellung (30.2) mit seinem Sperrende (33) aus der Öffnung (37) des Sacklochs (32) ausfährt.

3. Lenkschloss nach Anspruch 1 oder 2, **dadurch gekennzeichnet, dass** auch das Fühlglied (40) in den Steuernocken (12) integriert und bei der Rotordrehung stets mitdrehbar ist.

4. Lenkschloss nach einem der Ansprüche 1 bis 3, **dadurch gekennzeichnet, dass** das Fühlglied aus einem längsbeweglichen Fühlstift (40) besteht,
dass der Fühlstift (40) in einer parallel zur Drehachse (50) des Steuernockens (12) verlaufende Bohrung (44) angeordnet ist
und dass das eine Ende des Fühlstifts (40) ein sich am Rotor (10) abstützendes (15) Fühlende (42) ist,
während das andere Ende ein Halteende (41) ist, welches den Sperrstift (30) normalerweise in dessen Rückzugsstellung (30.1) hält.

5. Lenkschloss nach Anspruch 4, **dadurch gekennzeichnet, dass** die achsparallele Bohrung (44) für den Fühlstift (40) das Sackloch (32) kreuzt, welches zur Aufnahme des Sperrstifts (30) dient,
und dass der Sperrstift (30) in jenem Stiftabschnitt eine Aussparung (39) für den Fühlstift (40) aufweist, die in der Rückzugsstellung (30.1) des Sperrstifts (30) die achsparallele Bohrung (44) für den Fühlstift (40) profilmäßig ergänzt.

6. Lenkschloss nach einem der Ansprüche 3 bis 5, **dadurch gekennzeichnet, dass** der Fühlstift (40) einen Bund (43) aufweist, an dem sich das eine Ende einer Druckfeder (45) abstützt,
während das andere Druckfederende an einer Schulter (46) des Steuernockens (12) anliegt.

7. Lenkschloss nach einem der Ansprüche 4 bis 6, **dadurch gekennzeichnet, dass** die Bohrung (44) mit der Drehachse (50) des Steuernockens (12) und/oder des Rotors (10) zusammenfällt.

8. Lenkschloss nach einem der Ansprüche 4 bis 7, **dadurch gekennzeichnet, dass** der Sperrstift (30) und/oder der Fühlstift (40) Rundquerschnitte aufweisen.

9. Lenkschloss nach einem der Ansprüche 5 bis 8, **dadurch gekennzeichnet, dass** die Aussparung im Sperrstift (30) aus einer umfangsseitigen Ringnut (39) besteht, die ein zum Querschnitt des Fühlstifts (40) komplementäres Nutprofil besitzt.

## Claims

1. Steering column lock for vehicles,
- with a rotor (10) supported in a stationary housing (11), which rotor can be turned out of its resting position (10.1) and into at least one working position (10.2) after the activation of access-authorising means (28);
- with a control cam (12) held in the housing (11), which cam is rotated in conjunction with the rotation (17) of the rotor;
- with a locking bar (20) which can be changed over in relation to a steering shaft (25) by the control cam (12) between an interlocking location (20.1) and a releasing location (20.2);
and with an anti-forcing device (30, 40) for the lock, which device has a spring-loaded blocking pin (30);
- wherein (in the normal situation) the blocking pin (30) is located in a retracted position (30.1) in which a securing element engages behind a shoulder on the blocking pin (30) and permits changing-over of the locking bar (20);
- but (when the rotor (10) has been broken out) the securing element releases the blocking pin (30), whereupon the latter passes over (because of its spring-loading (31)) into an extended position (30.2) and obstructs the changing-over of the locking bar (20) from its interlocking location (20.1) into the releasing location (20.2);
- wherein the blocking pin (30) is integrated into the control cam (12) and can always be rotated in conjunction with rotation (17) of the rotor;
- wherein the blocking pin (30) is aligned with a blocking recess (38) in the housing (11) when the rotor (10) is in the resting position (10.1) but not when it is in the working position (10.2);
- and wherein the released blocking pin (30) travels into the blocking recess (38) in the housing (11) and obstructs rotation when the rotor (10) is in the resting position (10.1), but said blocking pin is supported against an inner face (48) of the housing and permits rotation of the control cam (12) when the rotor (10) is in the working position (10.2);
**characterised in that**
- the securing element consists of a sensing member (40) which is, in turn, spring-loaded (47) and which (when the rotor (10) is installed) is supported (15), at least indirectly, against the rotor (10) and holds the blocking pin (30) in its retracted position (30.1);
- and that, when the rotor (10) is missing, the sensing member moves, because of its spring-loading (31), into the housing space (36) left clear by said rotor (10) and releases the blocking pin (30).

2. Steering column lock according to claim 1, **characterised in that** the blocking pin (30) is located in a radial blind hole (32);
- that a compression spring (34), which is supported against the blocking pin (30), is disposed at the base of the blind hole (32);
- and that, in its extended position (30.2), the blocking pin (30) extends out of the opening (37) of the blind hole (32) with its blocking end (33).

3. Steering column lock according to claim 1 or 2, **characterised in that** the sensing member (40) is also integrated into the control cam (12) and can always be rotated in conjunction with the rotation of the rotor.

4. Steering column lock according to one of claims 1 to 3, **characterised in that** the sensing member consists of a longitudinally movable sensing pin (40);
- that said sensing pin (40) is disposed in a bore (44) extending parallel to the axis of rotation (50) of the control cam (12);
- and that one end of said sensing pin (40) is a sensing end (42) which is supported (15) against the rotor (10);
- while the other end is a holding end (41) which normally holds the blocking pin (30) in its retracted position (30.1).

5. Steering column lock according to claim 4, **characterised in that** the axially parallel bore (44) for the sensing pin (40) intersects the blind hole (32) which serves to receive the blocking pin (30); and that said blocking pin (30) has, **in that** section of the pin, a recess (39) for the sensing pin (40), which recess supplements, profile-wise, the axially parallel bore (44) for the sensing pin (40) when the blocking pin (30) is in the retracted position (30.1).

6. Steering column lock according to one of claims 3 to 5, **characterised in that** the sensing pin (40) has a collar (43) against which one end of a compression spring (45) is supported;
while the other end of said compression spring rests against a shoulder (46) on the control cam (12).

7. Steering column lock according to one of claims 4 to 6, **characterised in that** the bore (44) coincides with the axis of rotation (50) of the control cam (12) and/or of the rotor (10).

8. Steering column lock according to one of claims 4 to 7, **characterised in that** the blocking pin (30) and/or the sensing pin (40) have round cross-sections.

9. Steering column lock according to one of claims 5 to 8, **characterised in that** the recess in the blocking pin (30) consists of an annular groove (39) on the periphery, which groove possesses a profile which is complementary to the cross-section of the sensing pin (40).

## Revendications

1. Dispositif de verrouillage de colonne de direction pour véhicules
avec un rotor (10), monté dans un boîtier (11) localement fixe, rotor susceptible de tourner après mise en action de moyens d'autorisation d'accès (28), de sa position de repos (10.1) en au moins une position de travail (10.2),
avec une came de commande (12), logée dans le boîtier (11), qui est entraînée en rotation conjointement, lors de la rotation de rotor (17),
avec un pêne dormant (20), pouvant être commuté par une came commande (12) par rapport à une broche de direction (25), entre une position de verrouillage (20.1) et une position de libération (20.2),
et avec une sécurité de rupture (30, 40) du dispositif de verrouillage, présentant une tige de blocage (30) chargée par un ressort,
où - en cas normal - la tige de blocage (30) se trouve en une position de rétraction (30.1), à laquelle un élément de sécurité saisit par l'arrière un épaulement de la tige de blocage (30) et permet une commutation du pêne dormant (20),
mais - lorsque le rotor (10) est arraché - l'élément de sécurité, libérant la tige de blocage (30), suite à quoi celle-ci - du fait de sa sollicitation (31) - passant à une position de sortie (30.2) et bloquant toute commutation du pêne dormant (20), de sa position de verrouillage (20.1) à la position de libération (20.2),
où la tige de blocage (30) est intégrée dans la came de commande (12) et est toujours entraînée conjointement en rotation, lors d'une rotation de rotor (17),
où la tige de blocage (30), certes à la position de repos (10.1), mais pas à la position de travail (10.2) du rotor (10), est orientée vis-à-vis d'un évidement de blocage (38), ménagé dans le boîtier (11), et où la tige de blocage (30) libérée, certes, à la position de repos (10.1) du rotor (10), pénètre dans l'évidement de blocage (38) du boîtier (11) et bloque une rotation, mais, à la position de travail (10.2) du rotor (10), prend appui sur une face intérieure du boîtier (48) et permet une rotation de la came de commande (12),
**caractérisé en ce que**
l'élément de sécurité est formé d'un organe de palpage (40), de son côté soumis à une sollicitation élastique (47) et qui - lorsque le rotor (10) est monté - prend appui (15) au moins indirectement sur le rotor (10) et maintient la tige de blocage (30) à sa position de rétraction (30.1),
**en ce que**, en cas d'absence de rotor (10), l'organe de palpage, du fait de sa sollicitation élastique (31), pénètre dans l'espace de boîtier (36), libéré du rotor (10), et libère la tige de blocage (30).

2. Dispositif de verrouillage selon la revendication 1, **caractérisé en ce que** la tige de blocage (30) s'enfiche dans un trou borgne (32) radial,
**en ce qu'**au fond du trou borgne (32) est disposé un ressort de compression (34), qui prend appui sur la tige de blocage (30),
et **en ce que** la tige de blocage (30), à sa position déployée (30.2), sort, par son extrémité de blocage (33), hors de l'ouverture (37) du trou borgne (32).

3. Dispositif de verrouillage selon la revendication 1
ou 2, **caractérisé en ce qu'**également l'organe de palpage (40) est intégré dans la came de commande (12) et est toujours entraîné conjointement en rotation, lors de la rotation du rotor.

4. Dispositif de verrouillage selon l'une des revendications 1 à 3, **caractérisé en ce que** l'organe de palpage est formé d'une tige de palpage (40), déplacée longitudinalement,
**en ce que** la tige de palpage (40) est disposée dans un perçage (44) s'étendant parallèlement à l'axe de rotation (50) de la came de commande (12),
et **en ce qu'**une extrémité de la tige de palpage (40) est une extrémité de palpage (42), prenant appui (15) sur le rotor (10),
tandis que l'autre extrémité est une extrémité de maintien (41), maintenant la tige de blocage (30), normalement, à sa position de rétraction (30.1).

5. Dispositif de verrouillage selon la revendication 4, **caractérisé en ce que** le perçage (44), parallèle à l'axe, pour la tige de palpage (40), croise le trou borgne (32), servant à loger la tige de blocage (30),
et **en ce que** la tige de blocage (30), dans ce tronçon de tige, présente un évidement (39) pour la tige de palpage (40), qui complète, en termes de profil, le perçage (44) prévu pour la tige de palpage (40), parallèlement à l'axe, lorsque la tige de blocage (30) est à la position de rétraction (30.1).

6. Dispositif de verrouillage selon l'une des revendications 3 à 5, **caractérisé en ce que** la tige de perçage (40) présente une collerette (43), sur laquelle prend appui une extrémité d'un ressort de compression (45),
tandis que l'autre extrémité de ressort de compression appuie sur un épaulement (46) de la came de commande (12).

7. Dispositif de verrouillage selon l'une des revendications 4 à 6, **caractérisé en ce que** le perçage (44) coïncide avec l'axe de rotation (50) de la came de commande (12) et/ou du rotor (10).

8. Dispositif de verrouillage selon l'une des revendications 4 à 7, **caractérisé en ce que** la tige de blocage (30) et/ou la tige de palpage (40) présentent des sections transversales rondes.

9. Dispositif de verrouillage selon l'une des revendications 5 à 8, **caractérisé en ce que** l'évidement, ménagé dans la tige de blocage (30), est formé d'une gorge annulaire (39), située côté périphérie, ayant un profil de gorge, complémentaire de la section transversale de la tige de palpage (40).
